# EUROPÄISCHE PATENTSCHRIFT

(11) **EP 3 255 330 B1**
(45) Veröffentlichungstag und Bekanntmachung des Hinweises auf die Patenterteilung: **12.02.2020**
(21) Anmeldenummer: 16020226.3
(22) Anmeldetag: 09.06.2016
(51) Int. Cl.: F16L 21/00, F16L 25/14, H02G 3/06

(54) **VERWENDUNG EINER DICHTHÜLSE**
USE OF A SEALING SLEEVE
UTILISATION D'UNE DOUILLE D'ETANCHEITE

(43) Veröffentlichungstag der Anmeldung: 13.12.2017
(73) Patentinhaber: Hauff-Technik GmbH & Co. KG, 89568 Hermaringen (DE)
(72) Erfinder: Handwerker, Christoph, 89407 Dillingen/Donau (DE); Burkhardt, Andreas, 89522 Heidenheim (DE)
(74) Vertreter: König Szynka Tilmann von Renesse Patentanwälte Partnerschaft mbB

(56) Entgegenhaltungen:
- EP-A1- 2 362 128
- EP-A1- 2 851 488
- WO-A1-2017/033109
- DE-A1- 2 109 566
- DE-U1-202011 000 678
- DE-U1-202014 009 384

## Beschreibung

Die vorliegende Erfindung betrifft die Verwendung einer Dichthülse zum Aufsetzen auf und Dichten gegen eine Leitung.

Bei der Leitung kann es sich bspw. um ein Rohr handeln, und es können mit der Dichthülse dann z. B. zwei Rohrstücke miteinander verbunden werden. Dazu wird das eine Rohrstück von der einen Seite axial in die Dichthülse eingeschoben und das andere von der entgegengesetzten Seite. Die Dichthülse ist dann gegen die Außenfläche der Rohrstücke jeweils gedichtet, und die Rohrstücke sind fluidisch leitend miteinander verbunden. Dies soll ein mögliches Anwendungsgebiet einer vorliegend in Rede stehenden Dichthülse illustrieren, den Gegenstand aber nicht in seiner Allgemeinheit beschränken; weitere Anwendungsfälle ergeben sich auch aus der nachstehenden Beschreibung.

Die EP 2 362 128 A1 betrifft eine Rohrkupplung mit mehreren axial aufeinander folgenden Abschnitten, die in- bzw. aufeinander gestülpt werden können. Dies dient einer Anpassung an unterschiedliche Rohrdurchmesser. Im ausgestülpten Zustand hat die Rohrkupplung einen konstanten Innendurchmesser.

Die DE 20 2014 009 384 U1 betrifft einen Steckadapter, der an einer Rohrmuffe angebracht ist. Dabei kann ein freies Ende des Steckadapters zur Durchmesseranpassung eingestülpt werden.

Die DE 21 09 566 A1 betrifft eine Kupplungsmanschette zum Verbinden von Rohren und beschäftigt sich insbesondere mit einem vorteilhaften Herstellungsverfahren.

Die DE 20 2011 000 678 U1 betrifft eine Dichtmanschette mit endseitigen, zur Durchmesseranpassung einstülpbaren Stülpabschnitten. Diese verjüngen sich jeweils zu ihrem freien Ende hin.

Die nachveröffentlichte WO 2017/033109 A1 betrifft eine stülpbare Rohrkupplung, bei welcher die Stülpabschnitte im ineinandergestülpten Zustand mit Vorsprüngen und Vertiefungen ineinandergreifen.

Der Erfindung liegt das technische Problem zugrunde, eine besonders vorteilhafte Dichthülse als Gegenstand einer Verwendung bzw. Leitungsanordnung anzugeben.

Erfindungsgemäß löst diese Aufgabe die Verwendung mit der Dichthülse gemäß Anspruch 1.

Bevorzugte Ausgestaltungen finden sich in den abhängigen Ansprüchen und der gesamten Offenbarung, wobei in der Darstellung der Merkmale nicht immer im Einzelnen zwischen Verwendungs- und Vorrichtungsaspekten unterschieden wird; die Offenbarung ist immer dahingehend zu lesen, dass sie sowohl die Verwendung als bspw. auch eine Leitungsanordnung (mit Dichthülse und Leitung), die sich im Zuge der Verwendung ergibt, betrifft. Sofern also bspw. davon die Rede ist, dass ein Teil in eine bestimmte Anordnung/Position gebracht wird, ist dies auch gleichermaßen dahingehend zu lesen, dass es so angeordnet/positioniert ist.

Zunächst ist die Dichthülse mit dem Umstülpabschnitt derart vorgesehen, dass sie an unterschiedliche Leitungsaußendurchmesser angepasst werden kann. Da in der Umstülpposition des Umstülpabschnitts dieser und der Andrückabschnitt radial aufeinanderfolgend angeordnet sind, wird eine Durchmesserüberbrückung geschaffen und ist die Dichthülse entsprechend an einen kleineren Leitungsaußendurchmesser angepasst als bei in der Ausstülpposition angeordnetem ("ausgestülptem") Umstülpabschnitt. In den ausgestülpten Umstülpabschnitt kann also eine Leitung mit größerem Leitungsaußendurchmesser eingeschoben werden. Die Leitung wird dabei jedenfalls in den ausgestülpten Umstülpabschnitt eingeschoben, bevorzugt axial weiter bis in den Andrückabschnitt (und ggf. darüber hinaus).

Da die Dichthülse derart vorgesehen ist, dass der ausgestülpte Umstülpabschnitt jedenfalls weitgehend über seine axiale Erstreckung Innendurchmesser hat, die gleich/größer einem Innendurchmesser des Andrückabschnitts sind, kann die Leitung vorteilhafterweise in den ausgestülpten Umstülpabschnitt bzw. auch durch diesen hindurch bis in den Andrückabschnitt eingeschoben werden. Anfänglich haben die Erfinder für den ausgestülpten Umstülpabschnitt alternativ eine sich zum axialen Ende hin verjüngende (gewissermaßen trichterförmige) Form in Erwägung gezogen. Entsprechend hätten Innen- und Außendurchmesser des Umstülpabschnitts zum freien Ende hin abgenommen. Wenngleich dies ein Einstülpen ggf. etwas vereinfacht hätte, hätte der Umstülpabschnitt für das Einschieben einer Leitung mit größerem Leitungsaußendurchmesser abgetrennt werden müssen. Der Montageaufwand wäre erhöht und das Abtrennen auch irreversibel gewesen, was die Flexibilität verringert hätte.

Vorliegend hat der ausgestülpte Umstülpabschnitt über "zumindest einen größeren Teil" seiner axialen Erstreckung, also über bspw. mindestens 60 %, 70 %, 80 % bzw. 90 % (in der Reihenfolge der Nennung zunehmend bevorzugt) davon, besonders bevorzugt über seine gesamte axiale Erstreckung, jeweilige Innendurchmesser, die größer/gleich einem Innendurchmesser des Andrückabschnitts sind. Besonders bevorzugt überragt also in axialer Richtung gesehen eine Innenfläche des ausgestülpten Umstülpabschnitts eine Innenfläche des Andrückabschnitts nicht nach innen. Die Innenfläche des Umstülpabschnitts kann sogar auch (ein wenig) radial außerhalb liegen, bevorzugt liegen die Innenflächen radial auf derselben Höhe. Besagte Innenflächen sind generell bevorzugt koaxial.

Entsprechende Vorteile lassen sich im Allgemeinen aber auch erreichen, wenn der Innendurchmesser des ausgestülpten Umstülpabschnitts nicht über dessen gesamte axiale Länge größer/gleich dem Innendurchmesser des Andrückabschnitts ist. Ein axial entsprechend kurzer Bereich mit kleinerem Durchmesser lässt sich beim Einschieben der Leitung nämlich ggf. auch ein Stück weit aufdehnen, was andererseits bei einem über die gesamte axiale Länge kleineren Durchmesser so nicht möglich wäre. Der Innendurchmesser des ausgestülpten Umstülpabschnitts wird generell verglichen mit "einem Innendurchmesser" im Andrückabschnitt; sofern es im Andrückabschnitt unterschiedliche Innendurchmesser gibt, wird dabei dessen maximaler Innendurchmesser zugrundegelegt. Bevorzugt gilt der Vergleich aber auch mit einem mittleren Innendurchmesser des Andrückabschnitts.

Das Umstülpen des Umstülpabschnitts kann bspw. auch dadurch begünstigt werden, dass der Umstülpabschnitt mit einer kleineren Wandstärke, also dünnwandiger, als der Andrückabschnitt gefasst wird. Die generell in den Radialrichtungen genommene Wandstärke kann im Umstülpabschnitt bspw. um mindestens 5 %, 10 %, 15 % bzw. 20 % kleiner als im Andrückabschnitt sein; sie sollte aber bspw. (davon unabhängig) nicht weniger als 20 %, 30 % bzw. 40 % der Wandstärke im Andrückabschnitt betragen. Sofern an dem Andrückabschnitt bevorzugt außenseitig Erhebungen zur Positionierung eines Spannmittels vorgesehen sind (siehe unten) bleiben diese hierbei außer Betracht. Im Falle einer auch von solchen Erhebungen abgesehen variierenden Wandstärke wird ein über den jeweiligen Abschnitt (dessen axiale Erstreckung) gebildeter Mittelwert betrachtet, bevorzugt ist die Wandstärke jedoch jeweils (je Abschnitt) konstant.

Ohne ausdrücklich gegenteilige Angabe beziehen sich im Rahmen dieser Offenbarung "innen" und "außen" auf die Radialrichtungen (Gleiches gilt selbstverständlich auch für "Innen-" und "Außen-"), meint also bspw. "innerhalb" radial näher an der Längsachse und entsprechend "außerhalb" radial weiter von der Längsachse entfernt. Im Allgemeinen impliziert die Bezugnahme auf einen "Durchmesser" nicht zwingend eine Kreisform, sondern ist dieser Begriff auf den Mittelwert aus kleinster und größter Erstreckung in einer zur Längsachse senkrechten Ebene zu lesen; bei der bevorzugten Kreisform entspricht der Durchmesser dem Kreisdurchmesser (die Kreisdurchmesser werden in zur Längsachse senkrechten Ebenen betrachtet). Dies gilt analog für einen "Radius", der sich als halber Durchmesser ergibt und bevorzugt dem halben Kreisdurchmesser entspricht.

Generell ist die Dichthülse umlaufend, was sich wie auch die "Umlaufrichtung" generell auf einen Umlauf um die Längsachse bezieht, bevorzugt geschlossen, also unterbrechungsfrei durchgehend ausgebildet. Die Dichthülse ist bevorzugt hohlzylinderförmig, es ist also in axialer Richtung gesehen eine Kreis- bzw. Kreisringform bevorzugt. Eine sich vom einen zum entgegengesetzten axialen Ende der Dichthülse erstreckende Durchgangsöffnung bzw. generell die Öffnung, in welche die Leitung eingeschoben wird, ist in axialer Richtung gesehen kreisförmig und hat bevorzugt zumindest im Wesentlichen eine Zylinderform. Die "Längsachse", die sich parallel zur axialen Richtung erstreckt, ist bevorzugt eine Symmetrieachse, zu welcher die Dichthülse jedenfalls in ihren funktionalen Teilen, also bspw. von Markierungen abgesehen, dreh- bzw. bevorzugt rotationssymmetrisch ist.

Der umgestülpte Umstülpabschnitt, also der Umstülpabschnitt in Umstülpposition, und der Andrückabschnitt liegen bevorzugt flächig direkt aneinander an; im Allgemeinen wäre aber auch eine Zwischenlage denkbar, etwa ein beim Umstülpen dazwischen angeordnetes Einlegeblatt. Die bevorzugt flächige Anlage aneinander in der Umstülpposition muss dabei nicht notwendigerweise über jeweils die gesamte axiale Länge des Umstülp- und/oder Andrückabschnitts gegeben sein. Umstülp- und Andrückabschnitt sind einerseits durch die entsprechende Verwendung festgelegt, der Umstülpabschnitt ist also bspw. jener Abschnitt am axialen Ende der Dichthülse der aus- und umgestülpt ist bzw. wird. Dabei bleibt ein Zwischenabschnitt, der bevorzugt als Filmscharnier ausgebildet ist (siehe unten), über welchen die Stülpbewegung gelagert ist, außer Betracht; er wird also weder dem Umstülp- noch dem Andrückabschnitt zugerechnet. Bevorzugt erstreckt sich der ausgestülpte Umstülpabschnitt vom axialen Ende der Dichthülse über einen Bereich mit konstantem Innendurchmesser und/oder einen Bereich konstanter Wandstärke und/oder einen Bereich mit konstantem Außendurchmesser in axialer Richtung bis zu einer Stelle, an welcher der Innendurchmesser abnimmt und/oder die Wandstärke abnimmt und/oder der Außendurchmesser abnimmt (bevorzugt alle drei Kriterien in Kombination).

Auch der Andrückabschnitt ergibt sich aus der Verwendung, erstreckt sich nämlich (bei ausgestülptem Umstülpabschnitt) axial über den Bereich, über den außenseitig die Andrückkraft aufgebracht wird. Es gibt dann also insbesondere die axiale Erstreckung eines außenseitig auf der Dichthülse angeordneten Spannmittels (siehe unten im Detail) die axiale Erstreckung des Andrückabschnitts vor; das Spannmittel und der Andrückabschnitt fluchten also in den Radialrichtungen vollständig (über die gesamte axiale Länge). Sind bzw. werden auf der Dichthülse mehrere Spannmittel angeordnet, wird hierbei das dem fraglichen Umstülpabschnitt, der je nachdem axial oder radial auf den fraglichen Andrückabschnitt folgend angeordnet ist, axial nächste Spannmittel zugrundegelegt (Betrachtung bei ausgestülptem Umstülpabschnitt).

Im Allgemeinen könnte die Dichthülse bspw. in Andrück- und Umstülpabschnitt zwar elastisch verformbar vorgesehen sein, könnte an den Andrückabschnitt axial aber bspw. ein steifes Rohrteil anschließen. Eine entsprechende Anordnung ließe sich bspw. in einem 2K-Spritzgussverfahren herstellen, wobei das steife Rohrteil dann bspw. aus Acryl-Butadien-Styrol und der Andrück-/Umstülpabschnitt aus einem thermoplastischen Elastomer spritzgegossen sein könnte. Generell ist die Dichthülse ein einstückiges Teil, sind die einzelnen Abschnitte der Dichthülse also nicht zerstörungsfrei voneinander trennbar (was auch bei dem 2K-Spritzgussteil der Fall wäre).

Bevorzugt ist die Dichthülse insgesamt elastisch verformbar vorgesehen, und zwar in einem das Dichten durch Andrücken erlaubenden Umfang (der also über kleine elastische Verformungen, mit denen steife Materialien auf eine Krafteinwirkung reagieren, hinausgeht). Erfindungsgemäß ist die Dichthülse mit einer Shore-Härte (A) von höchstens 60 Shore, in dieser Reihenfolge zunehmend bevorzugt höchstens 57,5 Shore, 55 Shore, 52,5 Shore, 50 Shore, 47,5 Shore, 45 Shore bzw. 42,5 Shore, eher weich. Mögliche Untergrenzen können bspw. bei mindestens 35 Shore, 37,5 Shore, 40 Shore bzw. 42,5 Shore liegen.

Bevorzugt ist die Dichthülse monolithisch aus einem Dichthülsenmaterial gebildet, also von ggf. in dem Dichthülsenmaterial zufallsverteilten Einschlüssen abgesehen im Inneren frei von Materialgrenzen zwischen unterschiedlichen Materialien bzw. Materialien unterschiedlicher Herstellungsgeschichte. Bevorzugt ist die Dichthülse ein Formteil, das durch Gießen bzw. Pressen des Dichthülsenmaterials in eine Form hergestellt ist. Als Dichthülsenmaterial ist ein synthetisches Kautschukmaterial bevorzugt, bevorzugt ist Ethylen-Propylen-Dien-Kautschuk (EPDM).

In bevorzugter Ausgestaltung hat der ausgestülpte Umstülpabschnitt einen mittleren Innendurchmesser, der mindestens so groß wie der maximale, bevorzugt auch der mittlere (siehe vorne), Innendurchmesser des Andrückabschnitts ist. Generell wird ein "mittlerer Durchmesser" im Falle variierender Durchmesser im jeweiligen Abschnitt als über die axiale Erstreckung des jeweiligen Abschnitts gemittelter Mittelwert gebildet (als arithmetisches Mittel). Ferner wird generell, sofern der Umstülpabschnitt "in Ausstülpposition" betrachtet wird, auch der Andrückabschnitt bei ausgestülptem Umstülpabschnitt betrachtet, bleibt also bspw. eine etwaige Verformung des Andrückabschnitts, die sich bei umgestülptem Umstülpabschnitt ergeben kann, außer Betracht.

Bei einer bevorzugten Ausführungsform hat eine Innenfläche des ausgestülpten Umstülpabschnitts in die Längsachse beinhaltenden Schnittebenen betrachtet eine gerade Erstreckung, also die Form einer geraden Linie. Dies gilt bspw. über mindestens 50 %, 60 %, 70 %, 80 % bzw. 90 % (in der Reihenfolge der Nennung zunehmend bevorzugt) der axialen Erstreckung, bevorzugt über den gesamten Umstülpabschnitt. Im Allgemeinen ist die Bedingung nicht notwendigerweise für sämtliche die Längsachse beihaltenden Schnittebenen erfüllt, bspw. aber in Umlaufrichtung über einen Winkelbereich von mindestens 270°, 290°, 310°, 330° bzw. 350° (in der Reihenfolge der Nennung zunehmend bevorzugt), besonders bevorzugt vollständig umlaufend (360°), also in allen die Längsachse beihaltenden Schnittebenen.

Erfindungsgemäß hat der ausgestülpte Umstülpabschnitt einen zu seinem freien, dem Andrückabschnitt entgegengesetzten Ende hin leicht zunehmenden Innendurchmesser, was bspw. bei der Herstellung der Dichthülse ein Entformen verbessern helfen kann. Über seine gesamte axiale Erstreckung kann der Innendurchmesser bspw. um mindestens 0,1 %, 0,3 % bzw. 0,5 % zunehmen, wobei mögliche Obergrenzen (davon unabhängig) bspw. bei höchstens 5 %, 4 %, 3 %, 2 % bzw. 1 % liegen können. Vorzugsweise sind über den gesamten ausgestülpten Umstülpabschnitt hinweg die Innendurchmesser größer als der größte Innendurchmesser des Andrückabschnitts. Generell (auch unabhängig vom Innendurchmesser) hat der ausgestülpte Umstülpabschnitt bevorzugt einen konstanten Außendurchmesser.

Im Allgemeinen auch alternativ zu dem Umstülpabschnitt mit zum freien Ende hin leicht zunehmenden Innendurchmesser, bevorzugt jedoch in Kombination damit, hat auch der Andrückabschnitt einen in derselben Richtung (axial, vom Andrück- zum ausgestülpten Umstülpabschnitt weisend) leicht zunehmenden Innendurchmesser (betrachtet bei ausgestülpten Umstülpabschnitt). Bezüglich einer möglichen Quantifizierung wird ausdrücklich auf die Prozentangaben im vorstehenden Absatz verwiesen, die auch den Andrückabschnitt betreffend bevorzugt sein können (entsprechend über dessen gesamte axiale Erstreckung) Sowohl im Falle des Umstülp- als auch des Andrückabschnitts nimmt der jeweilige Innendurchmesser bevorzugt über mindestens 70 %, 80 % bzw. 90 % der axialen Erstreckung des jeweilig betrachteten Abschnitts zu (bzgl. der axialen Erstreckung gilt gleiches auch für den bevorzugt konstanten Außendurchmesser des Umstülpabschnitts, siehe vorheriger Absatz). Besonders bevorzugt nimmt der Innendurchmesser jeweils über die gesamte axiale Erstreckung des ausgestülpten Umstülp- und/oder des Andrückabschnitts zu (bzw. ist der Außendurchmesser über die gesamte axiale Erstreckung konstant).

Wandstärken der Dichthülse, die generell in den Radialrichtung genommen werden, können bspw. bei mindestens 3 mm, bevorzugt mindestens 5 mm, und (davon unabhängig) bei z. B. nicht mehr als 15 mm bzw. 10 mm liegen. Dies soll bei ausgestülpten Umstülpabschnitt(en) jedenfalls über 80 % bzw. 90 % der axialen Länge der Dichthülse gelten (ein Filmscharnier, siehe unten, kann also bspw. ausgenommen sein).

Bei einer bevorzugten Ausführungsform wird der Umstülpabschnitt beim Umstülpen in den Andrückabschnitt eingestülpt, ist der eingestülpte Umstülpabschnitt dann also bei eingeschobener Leitung radial zwischen einer Außenfläche der Leitung und einer Innenfläche des Andrückabschnitts angeordnet. Das Einstülpen kann bspw. insoweit vorteilhaft sein, als dann bei ein- und auch ausgestülptem Umstülpabschnitt über den Andrückabschnitt angedrückt werden kann. Bevorzugt ist bzw. wird außenseitig auf dem Andrückabschnitt ein Spannmittel angeordnet, welches die Dichthülse auf die Leitung andrückt. Im Falle des ausgestülpten Umstülpabschnitts wird ausschließlich der Andrückabschnitt angedrückt, wohingegen bei eingestülptem Umstülpabschnitt der Andrück- gegen den Umstülpabschnitt und damit letzterer gegen die Leitung gedrückt wird. Als Spannmittel ist eine Spannschelle bevorzugt.

Bevorzugt ist der Andrückabschnitt außenseitig von zwei axial beabstandeten, sich nach radial außen erhebenden Vorsprüngen eingefasst, zwischen denen das Spannmittel anordenbar/angeordnet ist. Zwischen den Vorsprüngen ist das Spannmittel dann auch im nicht verspannten Zustand unverlierbar gehalten. Bezogen auf die Umlaufrichtung sind die Vorsprünge bevorzugt jeweils vollständig umlaufend, also jeweils in sich geschlossen ausgebildet. Das Vorhandensein von zwei Vorsprüngen zum Halten des Spannmittels schließt im Allgemeinen nicht das Vorhandensein weiterer Vorsprünge aus, bevorzugt sind an der Dichthülse außenseitig insgesamt genau vier Vorsprünge vorgesehen, nämlich auch zwei Vorsprünge bei einem weiteren Andrückabschnitt am entgegengesetzten Ende der Dichthülse, siehe unten.

Bei einer bevorzugten Ausführungsform weist die Dichthülse innenseitig einen nach innen hervortretenden Vorsprung auf. Dieser folgt axial auf den Andrückabschnitt, und zwar entgegengesetzt zum ausgestülpten Umstülpabschnitt; es ist also in der einen axialen Richtung auf den Andrückabschnitt folgend der Vorsprung angeordnet (diese Richtung fällt mit einer Einschieberichtung der Leitung zusammen) und in der entgegengesetzten axialen Richtung (aus der Dichthülse heraus) der ausgestülpte Umstülpabschnitt. Der Vorsprung begrenzt als Anschlag die axiale Einschiebbarkeit einer Leitung, und zwar zumindest bei ausgestülptem Umstülpabschnitt. Bevorzugt tritt der Vorsprung nach innen so weit hervor, dass er auch bei umgestülptem Umstülpabschnitt als Anschlag dient.

Der Vorsprung kann dann also bspw. so weit nach innen hervortreten, dass ein minimaler Innendurchmesser der Dichthülse dort um mindestens 2 %, 3 %, 4 % bzw. 5 % kleiner als der mittlere Innendurchmesser der Dichthülse dort ist, wo der Andrückabschnitt und der umgestülpte Umstülpabschnitt radial aufeinanderfolgend angeordnet sind. Im Falle des eingestülpten Umstülpabschnitt wird der letztgenannte Durchmesser durch eine Innenfläche des Umstülpabschnitts bestimmt, die bei ausgestülptem Umstülpabschnitt eine Außenfläche ist. Der minimale Durchmesser im Bereich des Vorsprungs soll andererseits bspw. um nicht mehr als 30%, 20 % bzw. 10 % kleiner als der besagte mittlere Innendurchmesser der Dichthülse sein. Generell ist der als Anschlag dienende Vorsprung bevorzugt in Umlaufrichtung durchgehend ausgebildet, also in sich geschlossen.

Bei einer bevorzugten Ausführungsform ist die Dichthülse axial zwischen dem Andrückabschnitt und dem ausgestülpten Umstülpabschnitt als Filmscharnier ausgebildet. Über dieses Filmscharnier, das als Bereich verringerter Wandstärke realisiert ist, sind Umstülp- und Andrückabschnitt miteinander verbunden und ist entsprechend der Umstülpabschnitt umstülpbar an letzterem gelagert. Die Wandstärke im Bereich des Filmscharniers ist kleiner als jeweils im Andrück- und im Umstülpabschnitt. Sie kann im Bereich des Filmscharniers bspw. bei mindestens 1 mm liegen, wobei mögliche Obergrenzen (davon unabhängig) bspw. bei höchstens 3 mm bzw. 2 mm liegen können.

Bei einer bevorzugten Ausführungsform ist die Dichthülse auch am zweiten, dem ersten Ende axial entgegengesetzten Ende in einem weiteren Umstülpabschnitt umstülpbar ausgebildet und gibt es entsprechend auch einen weiteren Andrückabschnitt. Bei einer bevorzugten Verwendung wird dann der weitere Umstülpabschnitt umgestülpt, ist er also radial auf den weiteren Andrückabschnitt folgend angeordnet. So ist bspw. eine Anpassung an eine Leitung kleineren Durchmessers möglich, können dann also mit an beiden Enden umgestülpten Umstülpabschnitten bspw. zwei Rohrstücke kleineren Durchmessers miteinander verbunden werden.

Sämtliche für den "Umstülpabschnitt" und den "Andrückabschnitt" als bevorzugt offenbarten Ausgestaltungen sollen ausdrücklich auch für den "weiteren Umstülpabschnitt" und den "weiteren Andrückabschnitt" offenbart sein, es kann also bspw. auch ein weiteres Filmscharnier geben etc.. Besonders bevorzugt kann ein spiegelsymmetrischer Aufbau sein, bezogen auf eine zur Längsachse senkrechte, die Dichthülse mittig durchsetzende Spiegelebene.

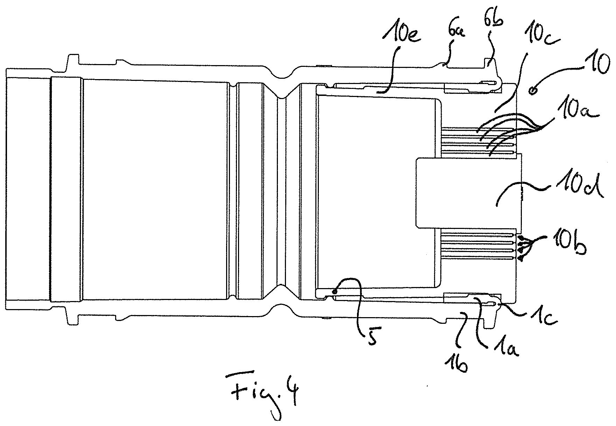

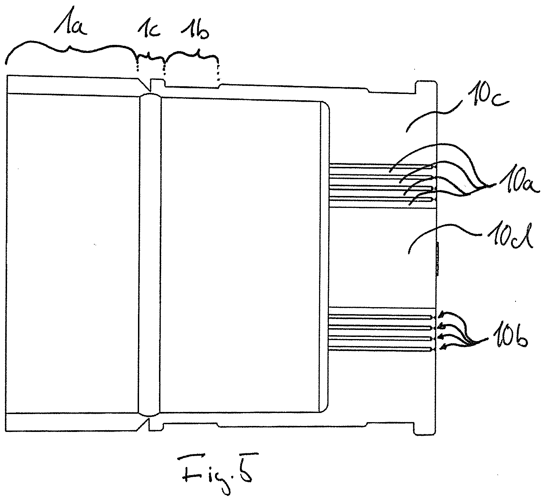

Bei den im Folgenden beschriebenen Ausführungsformen wird bzw. ist ein Dichtstopfen am zweiten Ende der Dichthülse vorgesehen. Dieser Dichtstopfen kann einerseits einstückig/monolithisch mit der Dichthülse ausgebildet sein, vgl. Figur 5 zur Illustration. Andererseits kann er aber auch an die Dichthülse angesetzt, insbesondere eingeschoben sein, vgl. Figur 4 zur Illustration, weswegen der Dichtstopfen und die Dichthülse begrifflich getrennt sind. Die nachstehenden Varianten sind ohne gegenteilige Angabe sowohl auf einen mit der Dichthülse einstückigen/monolithischen als auch auf einen angesetzten Dichtstopfen zu lesen.

Generell ist bei den Ausführungsformen mit Dichtstopfen die in das erste Ende der Dichthülse eingeschobene Leitung ein Hohlrohr, das in der Dichthülse endet. Dieses Hohlrohr dient als Schutzrohr, in dem eine weitere Leitung geführt ist, bspw. eine Gas- oder Wasserleitung, insbesondere aber auch ein Kabel, etwa ein Strom-, Telekommunikations- bzw. Datenkabel. Die weitere Leitung endet (von einer im Allgemeinen denkbaren Blindvorverlegung abgesehen) nicht in der Dichthülse, sondern tritt am entgegengesetzten Ende der Dichthülse aus und durchsetzt den Dichtstopfen, verläuft also durch eine Durchgangsöffnung im Dichtstopfen. Der Dichtstopfen wird bevorzugt radial auf die weitere Leitung angedrückt und ist dabei zugleich gegen die Dichthülse gedichtet. Damit ist die weitere Leitung aus dem als Schutzrohr dienenden Leerrohr herausgeführt und ist letzteres mit Dichthülse und Dichtstopfen druckfluidisch verschlossen.

Generell sind "ein"/"eine" im Rahmen dieser Offenbarung ohne gegenteilige Angabe als unbestimmte Artikel zu lesen, können also bspw. selbstverständlich auch mehrere weitere Leitungen in dem Hohlrohr geführt sein und den Dichtstopfen durchsetzen, kann dieser also auch mehrere Durchgangsöffnungen aufweisen, bspw. mindestens zwei oder drei und (davon unabhängig) z. B. nicht mehr als zehn, acht bzw. sechs Durchgangsöffnungen. Es kann aber andererseits auch genau eine Durchgangsöffnung bevorzugt sein.

Bei einer bevorzugten Ausführungsform ist jedenfalls vor dem Hindurchführen der weiteren Leitung in der Durchgangsöffnung des Dichtstopfens eine umlaufende Schale vorgesehen, die zur Anpassung an einen Außendurchmesser der weiteren Leitung herausnehmbar ist, also zur Anpassung an einen größeren Außendurchmesser herausgenommen wird und im Falle eines kleineren Außendurchmessers zur Durchmesserüberbrückung verbleibt. Die Schale ist Teil des Dichtstopfens, bevorzugt ist sie über eine Materialbrücke mit dem übrigen Dichtstopfen verbunden; eine umlaufende, die Schale vom übrigen Dichtstopfen trennende Ausnehmung erstreckt sich dann also axial nicht durch den gesamten Dichtstopfen, sondern bis zu der Materialbrücke. Besagte Ausnehmung kann bspw. als Schnitt eingebracht werden oder aber auch bereits in einem Formwerkzeug beim Gießen bzw. Pressen des Dichtstopfens berücksichtigt sein. Die Materialbrücke liegt bevorzugt an einer axialen Stirnseite des Dichtstopfens. Besonders bevorzugt ist die Materialbrücke an besagter Stirnseite mit einer umlaufenden Kerbe markiert, die bspw., wenn die Schale mit einem Schneidwerkzeug herausgetrennt wird, eine gewisse Führung bieten kann.

Bevorzugt sind eine Mehrzahl solcher Schalen radial aufeinanderfolgend vorgesehen, bspw. mindestens 2, bevorzugt mindestens 3 Schalen, wobei mögliche Obergrenzen bspw. bei höchstens 15, 10, 8 bzw. 6 Schalen liegen (in der Reihenfolge der Nennung zunehmend bevorzugt). Die Schalen hängen bevorzugt jeweils über eine Materialbrücke mit den übrigen Schalen und damit dem übrigen Dichtstopfen zusammen. Bevorzugt sind im Falle mehrerer Schalen an einer der axialen Stirnseiten des Dichtstopfens, bevorzugt an jener mit den Materialbrücken, Markierungen vorgesehen, die einem Monteur bestimmen helfen, welche der Schalen zum Hindurchführen einer weiteren Leitung eines bestimmten Außendurchmessers herauszunehmen sind. Mit den Markierungen werden Durchmesser bzw. Durchmesserbereiche angegeben.

Bei einer bevorzugten Ausführungsform mit einem Dichtstopfen ist die Durchgangsöffnung darin vor dem Hindurchführen der weiteren Leitung mit einem Blindverschluss verschlossen. Generell ist der Dichtstopfen bevorzugt aus einem elastisch verformbaren Material vorgesehen, insoweit wird auf die Anmerkungen eingangs zum Dichthülsenmaterial verwiesen. Bevorzugt ist bzw. sind dementsprechend auch (eine) Schale(n) und/oder der Blindverschluss aus demselben elastischen Material wie der übrige Dichtstopfen vorgesehen. Der Blindverschluss kann in den übrigen Dichtstopfen eingeschoben, also mehrteilig dazu sein. Andererseits kann der Blindverschluss aber auch über eine Materialbrücke mit dem übrigen Dichtstopfen verbunden sein, die vorstehenden Anmerkungen zur Materialbrücke der Schale gelten entsprechend.

Bevorzugt kann auch eine Kombination aus Schale(n) und Dichtstopfen sein. In einem solchen Fall könnten im Allgemeinen bspw. auch nur die Schale(n) und der Blindverschluss über (eine) Materialbrücke(n) miteinander verbunden sein (und dementsprechend mit "zumindest einem Teil" des übrigen Dichtstopfens). Bevorzugt ist bzw. sind jedenfalls die Schale(n) über eine Materialbrücke mit dem radial außerhalb angeordneten Teil des Dichtstopfens verbunden; der Blindverschluss ist dann entweder nur eingesetzt (vgl. Figur 4 zur Illustration) oder seinerseits über eine Materialbrücke mit der/den Schalen(n) und damit dem übrigen Dichtstopfen verbunden (vgl. Figur 5). Wie bereits erwähnt, ist der Dichtstopfen in bevorzugter Ausgestaltung ein gesondertes Teil, das in die Dichthülse eingeschoben ist. Bevorzugt sitzt der Dichtstopfen dann axial formschlüssig darin, ist er also mit einer Hinterschneidung jedenfalls innerhalb gewisser Grenzen gegen ein Herausrutschen (entgegen der Einschieberichtung) gesichert.

Generell kann ein in die Dichthülse einschiebbarer/eingeschobener Dichtstopfen axial an den Abschnitt mit dem Blindverschluss und/oder der Schale anschließend hülsenförmig ausgebildet sein. Dieser hülsenförmige Abschnitt liegt dann bevorzugt an der Innenwand der Dichthülse an und kann den Dichtstopfen so gegen ein Verkippen stabilisieren. In diesem hülsenförmigen Abschnitt kann der Dichtstopfen dann bspw. auch seinerseits mit einem umstülpbaren Umstülpabschnitt ausgebildet sein (also als Dichthülse im Sinne der vorliegenden Offenbarung); es könnte also bspw. eine erfindungsgemäße Dichthülse mit monolithisch damit ausgebildetem Dichtstopfen (vgl. Figur 5) in eine andere erfindungsgemäße Dichthülse ohne monolithisch damit ausgebildeten Dichtstopfen eingesetzt werden (analog der Situation gemäß Figur 4).

Bei einer bevorzugten Ausführungsform ist bzw. wird der Dichtstopfen in eine Dichthülse mit einem Umstülpabschnitt an jedem der einander entgegengesetzten axialen Enden (siehe vorne) eingeschoben, und zwar vorzugsweise in einen umgestülpten Umstülpabschnitt. Ein bevorzugt eingestülpter Umstülpabschnitt kann den Dichtstopfen dann auch formschlüssig halten (in Bezug auf die axiale Richtung). Über ein außenseitig am Andrückabschnitt angeordnetes Spannmittel (siehe vorne) wird dann der Andrück- gegen den Umstülpabschnitt gedrückt und letzterer gegen den Dichtstopfen, womit dieser schließlich nach innen an die Leitung (die weitere Leitung) angedrückt wird.

Die Erfindung betrifft auch eine Leitungsanordnung gemäß Anspruch 13.

In bevorzugter Ausgestaltung ergibt sich eine solche Leitungsanordnung als Ergebnis einer vorliegend offenbarten Verwendung, es sollen also sämtliche schwerpunktmäßig in der Verwendungskategorie beschriebenen Merkmale ausdrücklich auch für die Leitungsanordnung offenbart sein.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht immer im Einzelnen zwischen den unterschiedlichen Anspruchskategorien unterschieden wird.

Im Einzelnen zeigt
- Figur 1: eine Dichthülse für eine erfindungsgemäße Verwendung in einer geschnittenen Seitenansicht bei die Längsachse beinhaltender Schnittebene;
- Figur 2: die Dichthülse gemäß Figur 1 in anderer Konstellation, nämlich mit ihrem Umstülpabschnitt in Umstülpposition;
- Figur 3: die Dichthülse gemäß den Figuren 1 und 2 in einer Schrägansicht;
- Figur 4: die Dichthülse gemäß den Figuren 1 bis 3 mit einem eingesetzten Dichtstopfen in einer geschnittenen Seitenansicht;
- Figur 5: eine weitere Dichthülse für eine erfindungsgemäße Verwendung in einer geschnittenen Seitenansicht, wobei die Schnittebene die Längsachse beinhaltet;
- Figur 6: die Stirnseite der Dichthülse gemäß Figur 5 in axialer Aufsicht.

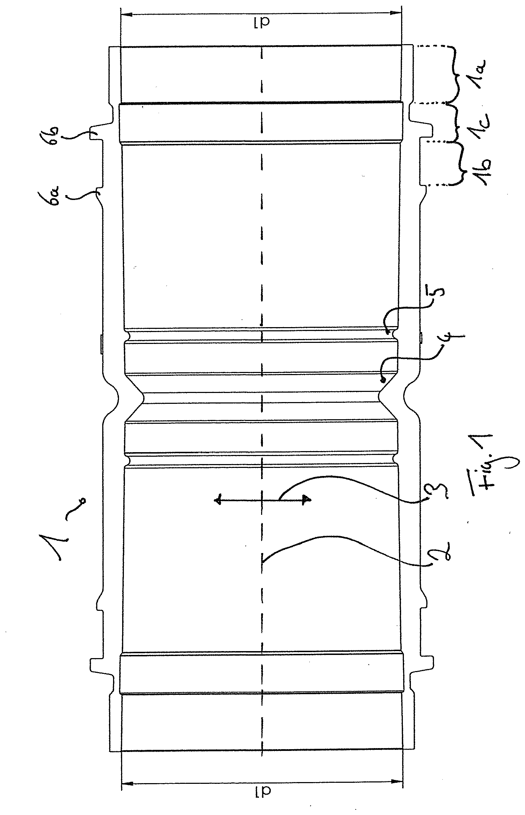

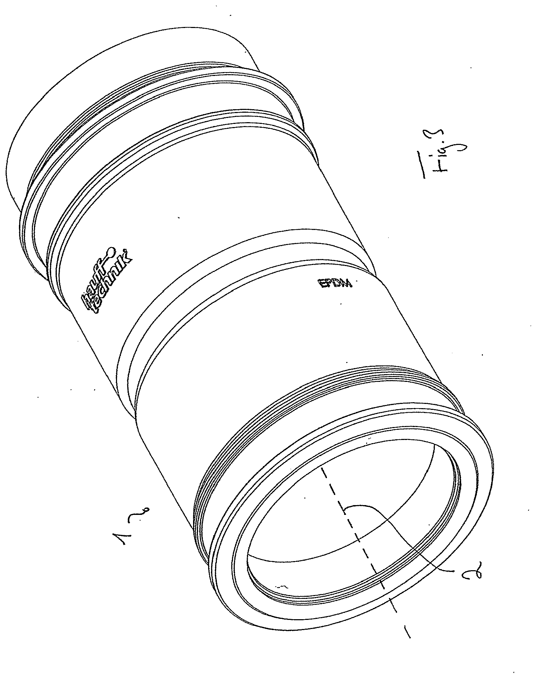

Figur 1 zeigt eine erste Dichthülse 1, die monolithisch aus EPDM geformt ist. Von außenseitigen Markierungen abgesehen (vgl. Figur 3) ist die Dichthülse 1 um eine Längsachse 2 rotationssymmetrisch. Ferner ist die Dichthülse 1 von besagten Markierungen abgesehen in Bezug auf eine zur Längsachse 2 senkrechte, die Dichthülse 1 mittig durchsetzende Ebene spiegelsymmetrisch aufgebaut, weswegen nun vorwiegend auf die rechte Bildhälfte Bezug genommen wird (die Ausführungen aber analog für die linke Bildhälfte gelten).

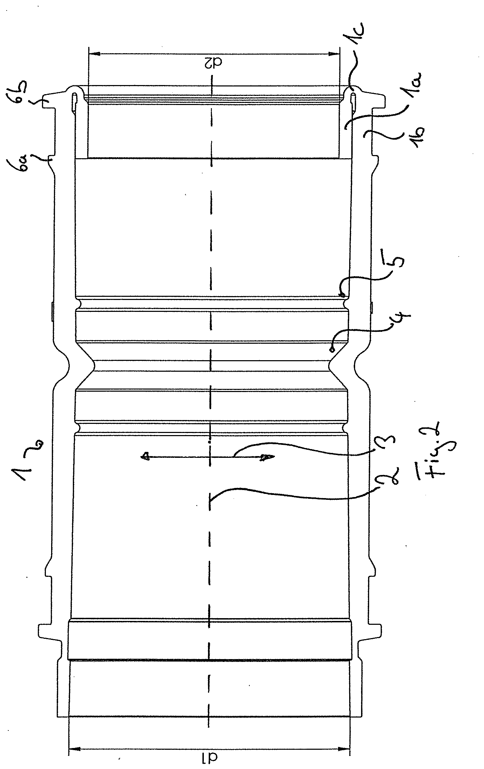

An ihrem axialen Ende ist die Dichthülse 1 in einem Umstülpabschnitt 1a einstülpbar ausgebildet, vgl. die Figuren 1 und 2 in der Zusammenschau. Figur 1 zeigt den Umstülpabschnitt 1a in Ausstülpposition, Figur 2 hingegen in Umstülpposition. In Figur 1 ist der Umstülpabschnitt 1a axial auf einen Andrückabschnitt 1b folgend angeordnet, in Figur 2 hingegen in den Radialrichtungen 3 darauf folgend. In Figur 1 kann eine Leitung mit größerem Außendurchmesser von rechts in die Dichthülse 1 eingeschoben werden, in der Konstellation gemäß Figur 2 hingegen ist der Umstülpabschnitt 1a zur Durchmesserüberbrückung im Falle einer Leitung kleineren Außendurchmessers eingestülpt.

In beiden Konstellationen wird die Leitung durch den Umstülp- 1a und den Andrückabschnitt 1b hindurch bis zu einem Anschlag 4 eingeschoben. Anschließend wird eine außenseitig auf dem Andrückabschnitt 1b angeordnete Spannschelle (wie die Leitung auch, nicht dargestellt) angezogen und die Dichthülse 1 so gegen die Leitung angedrückt, und zwar gemäß Figur 1 der Andrückabschnitt 1b selbst, wohingegen gemäß Figur 2 über den Andrückabschnitt 1b der eingestülpte Umstülpabschnitt 1a angedrückt wird.

In dem ausgestülpten Umstülpabschnitt 1a hat die Dichthülse 1 einen Innendurchmesser d1, der etwas größer als der Innendurchmesser in dem Andrückabschnitt 1b ist. Eine Leitung größeren Durchmessers, die keine Durchmesserüberbrückung erfordert und dementsprechend keinen eingestülpten Umstülpabschnitt 1a, kann durch den ausgestülpten Umstülpabschnitt 1a hindurch bis in den Andrückabschnitt 1b und letztlich bis zu dem Anschlag 4 eingeschoben werden kann. Der Umstülpabschnitt 1a muss im Falle einer größeren Leitung also nicht abgetrennt werden, was den Montageaufwand verringern und die Flexibilität erhöhen hilft. Der Innendurchmesser nimmt vorliegend in dem Andrück- 1b und dem Umstülpabschnitt 1a zum freien Ende der Dichthülse 1 hin leicht zu, was das Entformen vereinfachen hilft.

Axial mittig der Dichthülse 1, nämlich im Bereich des Anschlags 4, hat die Dichthülse 1 ihren minimalen Innendurchmesser. Der Anschlag 4 tritt so weit nach innen hervor, dass er auch die Einschiebbarkeit einer Leitung kleineren Innendurchmessers bei eingestülptem Umstülpabschnitt 1a (siehe Figur 2) begrenzt.

Dem Anschlag 4 in Bezug auf die Einschieberichtung der Leitung axial vorgelagert ist eine weitere nach innen hervortretende, umlaufende Erhebung 5 zu erkennen, die sich zum einen als Dichtlippe an die Außenfläche der dann bis zum Anschlag 4 eingeschobenen Leitung anlegen kann; bzgl. einer weiteren Funktion wird auf Figur 4 verwiesen. Ferner sind auch außenseitig an der Dichthülse 1 zwei axial zueinander beabstandete, jeweils umlaufend in sich geschlossene Erhebungen 6a, b zu erkennen. Axial dazwischen wird die Spannschelle platziert, die dann von den Erhebungen 6a, b auch im unverspannten Zustand unverlierbar gehalten ist.

Figur 3 zeigt die Dichthülse 1 in einer Schrägansicht, nämlich schräg zur Längsachse 2 daraufblickend.

Figur 4 zeigt die Dichthülse 1 mit eingestülptem Umstülpabschnitt 1a (siehe Figur 2), wobei in die Dichthülse 1 ein Dichtstopfen 10 eingesetzt ist. Die Dichthülse 1 wird dann derart genutzt, dass von der in Figur 4 linken Seite her ein Schutzrohr eingeschoben wird, das in der Dichthülse 1 endet. Je nach Außendurchmesser des Schutzrohres wird es bei aus- oder eingestülptem Umstülpabschnitt 1a eingeschoben. In dem Schutzrohr ist dann eine weitere Leitung geführt, bspw. ein Kabel. Dieses endet nicht in der Dichthülse 1, sondern erstreckt sich durch diese hindurch und durchsetzt insbesondere den Dichtstopfen 10 durch eine Durchgangsöffnung darin (vorliegend ist ein Aufbau für genau eine Leitung gezeigt, ein Dichtstopfen kann aber selbstverständlich auch für mehrere Leitungen ausgelegt sein, also mehrere Durchgangsöffnungen aufweisen).

In Figur 4 ist der Dichtstopfen 10 in seinem originären Zustand, vor dem Hindurchführen der weiteren Leitung gezeigt. In der Durchgangsöffnung sind vier umlaufende Schalen 10a angeordnet, die zur Anpassung an unterschiedliche Außendurchmesser der weiteren Leitung herausgenommen werden können. Die Schalen 10a hängen über axial stirnseitig angeordnete Materialbrücken 10b miteinander und auch mit einem radial außerhalb angeordneten Teil 10c des übrigen Dichtstopfens zusammen. Nach Auswahl der Schale 10a, deren Innendurchmesser in etwa dem Außendurchmesser der weiteren Leitung entspricht, wird die radial innerhalb dieser Schale 10a angeordnete Materialbrücke 10b aufgetrennt und wird bzw. werden die radial innerhalb angeordnete(n) Schale(n) 10a herausgenommen.

Ferner weist der Dichtstopfen 10 einen Blindverschluss 10d auf, der in die Schalenfolge eingesetzt ist und die Durchgangsöffnung verschließt. Vorliegend ist der Blindverschluss 10d eingeschoben und damit mehrteilig zum übrigen Dichtstopfen, er könnte jedoch auch den Schalen 10a vergleichbar über eine Materialbrücke damit verbunden sein. Der Dichtstopfen 10 weist schließlich noch einen hülsenförmigen Abschnitt 10e auf, der axial an den an die weitere Leitung angedrückten Teil des Dichtstopfens 10 anschließt. Der hülsenförmige Abschnitt 10e stabilisiert den Dichtstopfen 10 gegen ein Verkippen und hintergreift zudem den Vorsprung 5 der Dichthülse 1, sodass der Dichtstopfen 10 dann axial formschlüssig in der Dichthülse 1 gehalten ist.

Der Dichtstopfen 10 ist in das Ende der Dichthülse 1 bei dort eingestülptem Umstülpabschnitt 1a eingesetzt. Auch mit dem eingestülpten Umstülpabschnitt 1a bildet der Dichtstopfen 10 eine Hinterschneidung, was die axial formschlüssige Arretierung verstärken hilft. Zudem ist der Dichtstopfen 10, konkret der dann an die weitere Leitung angedrückte Teil davon, radial fluchtend mit dem Andrückabschnitt 1b angeordnet, sodass die dort angeordnete Spannschelle (nicht gezeigt), mit welcher ansonsten bspw. auch der Andrückabschnitt 1b selbst an die Leitung angedrückt wird, zum radial Komprimieren und damit Andrücken an die weitere Leitung des Dichtstopfens 10 genutzt werden kann.

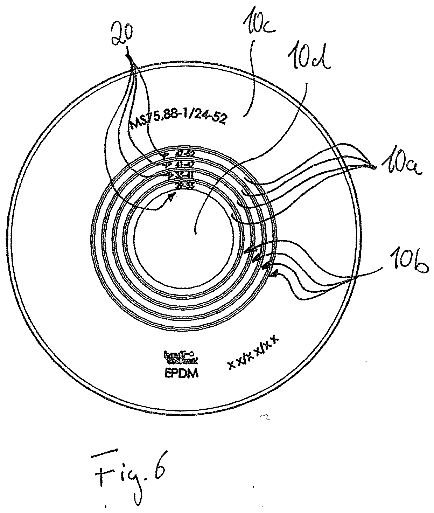

Auch die Ausführungsform gemäß den Figuren 5 und 6 zeigt eine Dichthülse 1 mit einem Dichtstopfen 10, die in diesem Fall monolithisch miteinander als ein Formteil vorgesehen sind. An dem in der Figur linken axialen Ende gliedert sich die Dichthülse 1 der vorstehenden Beschreibung entsprechend in Umstülpabschnitt 1a und Andrückabschnitt 1b, wobei axial dazwischen ein Filmscharnier 1c ausgebildet ist. Generell werden im Rahmen dieser Offenbarung dieselben Bezugszeichen für Teile mit derselben Funktion verwendet und wird insofern immer auch auf die Beschreibung zu den übrigen Figuren verwiesen.

Figur 5 zeigt den Umstülpabschnitt 1a in Ausstülpposition und somit die Dichthülse 1 wie sie auf eine Leitung größeren Durchmessers gesetzt würde. Der Innendurchmesser des ausgestülpten Umstülpabschnitts 1a ist in etwa so groß wie jener des Andrückabschnitts 1b (zur besseren Entformung kann er sogar auch ein wenig größer sein, siehe vorne), sodass bei ausgestülptem Umstülpabschnitt 1a die Leitung durch den Umstülpabschnitt 1a hindurch eingeschoben werden kann. Zur Anpassung an eine Leitung kleineren Durchmessers würde der Umstülpabschnitt 1a eingestülpt (nicht im Einzelnen dargestellt), vgl. die vorstehende Beschreibung analog.

Die Dichthülse 1 gemäß Figur 5 ist mit nur einem Umstülpabschnitt 1a vorgesehen, an das entgegengesetzte Ende ist direkt der Dichtstopfen 10 angeformt. Bzgl. dessen Aufbau und Funktion wird auf die Beschreibung zu Figur 4 verwiesen.

Figur 6 zeigt den Dichtstopfen 10 schließlich noch in einer Aufsicht entlang der Längsachse 2 daraufblickend. Dabei ist zum einen der eingesetzte Blindverschluss 10d und sind ferner die Schalen 10a zu erkennen, die über die Materialbrücken 10b zusammenhängen. Die Materialbrücken 10b sind jeweils über umlaufende Einkerbungen gekennzeichnet, die jeweils das Abtrennen der jeweiligen Materialbrücke 10b vereinfachen. Ferner ist in dieser Aufsicht auch eine Markierung 20 an jeder der Schalen 10a zu erkennen, die jeweils den Durchmesserbereich (bezogen auf den Außendurchmesser der hindurchgeführten Leitung) angibt, in welchem die jeweilige Schale 10a optimal genutzt werden kann. Der vorliegend gezeigte Dichtstopfen 10 ist zum Hindurchführen genau einer Leitung ausgelegt und weist dementsprechend genau eine Durchgangsöffnung auf; bei grundsätzlich gleichem Aufbau sind aber auch Dichtstopfen mit mehreren Durchgangsöffnungen möglich.

## Patentansprüche

1. Verwendung einer Dichthülse (1) zum Aufsetzen auf und Dichten gegen eine Leitung, und zwar durch Andrücken an die Leitung in Radialrichtungen (3) nach innen, welche Radialrichtungen (3) senkrecht auf einer Längsachse (2) der Dichthülse (1) stehen,
welche Dichthülse (1), die eine Shore-Härte (A) von höchstens 60 Shore hat, zumindest an einem ersten ihrer einander axial entgegengesetzten Enden in einem Umstülpabschnitt (1a) derart umstülpbar ausgebildet ist, dass der Umstülpabschnitt (1a) und ein davon verschiedener Andrückabschnitt (1b) der Dichthülse (1)
- in einer Umstülpposition des Umstülpabschnitts (1a) in den Radialrichtungen (3) aufeinander folgend angeordnet sind und
- in einer Ausstülpposition des Umstülpabschnitts (1a) axial aufeinander folgend angeordnet sind,
wobei der Umstülpabschnitt (1a) in der Ausstülpposition über zumindest einen größeren Teil seiner axialen Erstreckung einen jeweiligen Innendurchmesser hat, der mindestens so groß wie ein Innendurchmesser des Andrückabschnitts (1b) ist,
und wobei bei in der Ausstülpposition angeordnetem Umstülpabschnitt (1a) in einer axialen Richtung, die von dem Andrückabschnitt (1b) zu dem Umstülpabschnitt (1a) weist, der Umstülpabschnitt (1a) einen zunehmenden Innendurchmesser hat und/oder der Andrückabschnitt (1b) einen zunehmenden Innendurchmesser hat, bei welcher Verwendung der Umstülpabschnitt (1a) zur Anpassung der Dichthülse (1) an einen kleineren Leitungsaußendurchmesser in die Umstülpposition gebracht wird.

2. Verwendung nach Anspruch 1, bei welcher der Umstülpabschnitt (1a) in der Ausstülpposition einen mittleren Innendurchmesser hat, der mindestens so groß wie der Innendurchmesser des Andrückabschnitts (1b) ist.

3. Verwendung nach Anspruch 1 oder 2, bei welcher eine Innenfläche des Umstülpabschnitts (1a) in der Ausstülpposition in die Längsachse (2) beinhaltenden Schnittebenen betrachtet eine gerade Erstreckung hat.

4. Verwendung nach einem der vorstehenden Ansprüche, bei welcher der Umstülpabschnitt (1a) beim Umstülpen in den Andrückabschnitt (1b) eingestülpt wird, sodass der Umstülpabschnitt in der Umstülpposition dann bei auf die Leitung aufgesetzter Dichthülse (1) in den Radialrichtungen (3) zwischen einer Außenfläche der Leitung und einer Innenfläche des Andrückabschnitts (1b) angeordnet ist.

5. Verwendung nach einem der vorstehenden Ansprüche, bei welcher die Dichthülse (1) innenseitig einen nach innen hervortretenden Vorsprung (4) aufweist, der axial auf den Andrückabschnitt (1b) folgt, und zwar entgegengesetzt zu dem Umstülpabschnitt (1a) in der Ausstülpposition, welcher Vorsprung (4) beim Aufsetzen der Dichthülse (1) jedenfalls für eine axiale Einschiebbarkeit einer Leitung größeren Durchmessers bei in der Ausstülpposition angeordnetem Umstülpabschnitt (1a) als Anschlag axial begrenzt, bevorzugt auch der Leitung kleineren Durchmessers bei in der Umstülpposition angeordnetem Umstülpabschnitt (1a).

6. Verwendung nach einem der vorstehenden Ansprüche, bei welcher die Dichthülse (1) axial zwischen dem Andrückabschnitt (1b) und dem Umstülpabschnitt (1a) in der Ausstülpposition als Filmscharnier (1c) ausgebildet ist, über welches der Umstülpabschnitt (1a) umstülpbar an dem Andrückabschnitt (1b) gelagert ist.

7. Verwendung nach einem der vorstehenden Ansprüche, bei welcher die Dichthülse (1) auch an einem zweiten, dem ersten Ende axial entgegengesetzten Ende in einem weiteren Umstülpabschnitt derart umstülpbar ausgebildet ist, dass der weitere Umstülpabschnitt und ein davon verschiedener weiterer Andrückabschnitt der Dichthülse (1)
- in einer Umstülpposition des weiteren Umstülpabschnitts in den Radialrichtungen (3) aufeinander folgend angeordnet sind und
- in einer Ausstülpposition des weiteren Umstülpabschnitts axial aufeinander folgend angeordnet sind.

8. Verwendung nach einem der vorstehenden Ansprüche, bei welcher die Leitung, an welche der Andrückabschnitt (1b) und der Umstülpabschnitt (1a) in der Umstülpposition gemeinsam angedrückt werden, ein Hohlrohr ist, welches in der Dichthülse (1) endet und in dem eine weitere Leitung geführt ist, wobei an der Dichthülse (1) an einem zweiten, dem ersten Ende axial entgegengesetzten Ende ein Dichtstopfen (10) vorgesehen ist, wobei die weitere Leitung durch eine Durchgangsöffnung in dem Dichtstopfen (10) hindurchgeführt wird und der Dichtstopfen (10) die weitere Leitung gegen die Dichthülse (1) dichtet, wobei jedenfalls vor dem Hindurchführen der weiteren Leitung in der Durchgangsöffnung eine umlaufende Schale (10a) vorgesehen ist, die zur Anpassung an einen Außendurchmesser der weiteren Leitung herausnehmbar ist.

9. Verwendung nach einem der vorstehenden Ansprüche, bei welcher die Leitung, an welche der Andrückabschnitt (1b) und der Umstülpabschnitt (1a) in der Umstülpposition gemeinsam angedrückt werden, ein Hohlrohr ist, welches in der Dichthülse (1) endet und in dem eine weitere Leitung geführt ist, wobei an der Dichthülse (1) an einem zweiten, dem ersten Ende axial entgegengesetzten Ende ein Dichtstopfen (10) vorgesehen ist, wobei die weitere Leitung durch eine Durchgangsöffnung in dem Dichtstopfen (10) hindurchgeführt wird und der Dichtstopfen die weitere Leitung gegen die Dichthülse (1) dichtet, wobei vor dem Hindurchführen der weiteren Leitung die Durchgangsöffnung mit einem Blindverschluss (10d) verschlossen ist, der zum Hindurchführen der weiteren Leitung herausgenommen wird.

10. Verwendung nach Anspruch 8 oder 9, bei welcher die Schale (10a) und/oder der Blindverschluss (10d) über eine Materialbrücke (10b) mit zumindest einem Teil des übrigen Dichtstopfens (10) verbunden ist.

11. Verwendung nach einem der Ansprüche 8 bis 10, bei welcher der Dichtstopfen (10) ein gesondertes Teil ist, das in die Dichthülse (1) eingeschoben ist, und dann bevorzugt axial formschlüssig darin gehalten ist.

12. Verwendung nach Anspruch 11 in Verbindung mit Anspruch 7, bei welcher der Dichtstopfen (10) in den weiteren Andrückabschnitt der Dichthülse (1) und den weiteren Umstülpabschnitt in Umstülpposition eingeschoben ist.

13. Leitungsanordnung mit
einer Leitung und
einer Dichthülse (1), die eine Shore-Härte (A) von höchstens 60 Shore hat, welche Dichthülse (1) zumindest an einem ersten ihrer einander axial entgegengesetzten Enden in einem Umstülpabschnitt (1a) derart umstülpbar ausgebildet ist, dass der Umstülpabschnitt (1a) und ein davon verschiedener Andrückabschnitt (1b) der Dichthülse (1)
- in einer Umstülpposition des Umstülpabschnitts (1a) in Radialrichtungen (3) aufeinander folgend angeordnet sind und
- in einer Ausstülpposition des Umstülpabschnitts (1a) axial aufeinander folgend angeordnet sind,
wobei der Umstülpabschnitt (1a) in der Ausstülpposition über zumindest einen größeren Teil seiner axialen Erstreckung einen jeweiligen Innendurchmesser hat, der mindestens so groß wie ein Innendurchmesser des Andrückabschnitts (1b) ist,
und wobei bei in der Ausstülpposition angeordnetem Umstülpabschnitt (1a) in einer axialen Richtung, die von dem Andrückabschnitt (1b) zu dem Umstülpabschnitt (1a) weist, der Umstülpabschnitt (1a) einen zunehmenden Innendurchmesser hat und/oder der Andrückabschnitt (1b) einen zunehmenden Innendurchmesser hat
bei welcher Leitungsanordnung der Umstülpabschnitt (1a) zur Anpassung der Dichthülse (1) an einen kleineren Leitungsaußendurchmesser in der Umstülpposition gemeinsam mit dem Andrückabschnitt (1b) an die Leitung angedrückt wird.

14. Leitungsanordnung nach Anspruch 13, hergestellt durch eine Verwendung nach einem der Ansprüche 1 bis 12.

## Claims

1. A use of a seal sleeve (1) for placing it on and sealing against a line, namely by pressing it against the line in radial directions (3) inwards, which radial directions (3) lie perpendicular to a longitudinal axis (2) of the seal sleeve (1),
wherein the seal sleeve (1), which has a Shore hardness (A) of 60 Shore at maximum, is formed foldable in a fold section (1a) at least at a first one of its axially opposite ends such that the fold section (1a) and a press section (1b) different from the fold section (1a) of the seal sleeve (1)
- are, in a folded position of the fold section (1a), arranged consecutive in the radial directions (3) and
- are, in an unfolded position of the fold section (1a), arranged axially consecutive,
wherein, in the unfolded position, the fold section (1a) has, at least over a larger part of its axial extension, a respective inner diameter which has at least the size of an inner diameter of the press section (1b),
and wherein, when the fold section (1a) is in the unfolded position, the fold section (1a) has an increasing diameter in an axial direction from the press section (1b) to the fold section (1a) and/or the press section (1b) has an increasing inner diameter in this axial direction,
wherein, in the use of the seal sleeve (1), the fold section (1a) is brought into the folded position for an adaption of the seal sleeve (1) to a smaller outer line diameter.

2. The use of claim 1, wherein the fold section (1a) has, in the unfolded position, a mean inner diameter which has at least the size of the inner diameter of the press section (1b).

3. The use of claim 1 or 2, wherein an inner surface of the fold section (1a) in the unfolded position has a straight extension in sectional planes containing the longitudinal axis (2).

4. The use of one of the preceding claims, wherein the fold section (1a) is folded inwards into the press section (1b) so that the fold section is, when the seal sleeve (1) is placed on the line, arranged in the radial directions (3) between an outer surface of the line and an inner surface of the press section (1b).

5. The use of one of the preceding claims, wherein the seal sleeve (1) comprises a projection (4) on the inside, which projects inwards and is arranged axially consecutive to the press section (1b), namely opposite to the fold section (1a) in the unfolded position, the projection (4) forming a stop for the axial insertion of a line, at least when the fold section (1a) is arranged in the unfolded position for a line having a larger diameter, preferably also for a line having a smaller diameter when the fold section (1a) is arranged in the folded position.

6. The use according to one of the preceding claims, wherein the seal sleeve (1) is formed as a film hinge (1c) axially between the press section (1b) and the fold section (1a) in the unfolded position, wherein the fold section (1a) is held foldable at the press section (1b) by the film hinge (1c).

7. The use according to one of the preceding claims, wherein the seal sleeve (1) is also formed foldable in a further fold section at a second end axially opposite to the first end so that the further fold section and a further press section of the seal sleeve (1), which is different from the further fold section,
- are, in a folded position of the further fold section, arranged consecutive in the radial directions (3) and
- are, in an unfolded position of the further fold section, arranged axially consecutive.

8. The use according to one of the preceding claims, wherein the line, against which the press section (1b) and the fold section (1a) are pressed together in the folded position, is a hollow pipe which ends in the seal sleeve (1), wherein a further line is guided in the hollow pipe, and wherein a seal plug (10) is arranged at the seal sleeve (1) at a second end thereof axially opposite to the first end, wherein the further line is led through a through opening in the seal plug (10), the seal plug (10) sealing the further line against the seal sleeve (1), wherein a circumferential shell (10a) is arranged in the through opening at least prior to leading through the further line, which can be removed for an adaption to an outer diameter of the further line.

9. The use according to one of the preceding claims, wherein the line, against which the press section (1b) and the fold section (1a) are pressed together in the unfolded position, is a hollow pipe which ends in the seal sleeve (1), wherein a further line is guided in the hollow pipe, and wherein a seal plug (10) is arranged at the seal sleeve (1) at a second end thereof axially opposite to the first end, wherein the further line is led through a through opening in the seal plug (10), the seal plug (10) sealing the further line against the seal sleeve (1), wherein the through opening is closed by a blind closure (10d) prior to leading through the further line, which is removed for leading through the further line.

10. The use of claim 8 or 9, wherein the shell (10a) and/or the blind closure (10b) is or are connected with at least a part of the remaining seal plug (10) by a material bridge (10b).

11. The use of any of claims 8 to 10, wherein the seal plug (10) is a separate part which is pushed into the seal sleeve (1) and is preferably held by an axial form fit in the seal sleeve (1).

12. The use of claim 11 in combination with claim 7, wherein the seal plug (10) is pushed into the further press section of the seal sleeve (1) and into the further fold section in the folded position.

13. Line arrangement having
a line and
a seal sleeve (1), which has a shore hardness (A) of 60 shore at maximum,
wherein the seal sleeve (1), which has a shore hardness (A) of 60 shore at maximum, is formed foldable in an fold section (1a) at least at a first one of its axially opposite ends, such that the fold section (1a) and a press section (1b) different from the fold section (1a) of the seal sleeve (1)
- are, in a folded position of the fold section (1a), arranged consecutive in radial directions (3) and
- are, in an unfolded position of the fold section (1a), arranged axially consecutive,
wherein, in the unfolded position, the fold section (1a) has, at least over a larger part of its axial extension, a respective inner diameter which has at least the size of an inner diameter of the press section (1b),
and wherein, when the fold section (1a) is in the unfolded position, the fold section (1a) has an increasing diameter in an axial direction from the press section (1b) to the fold section (1a) and/or the press section (1b) has an increasing inner diameter in this axial direction,
wherein, in the line arrangement, the fold section (1a) is arranged in the folded position for an adaption of the seal sleeve (1) to a smaller outer line diameter and is pressed against the line together with the press section (1b).

14. The line arrangement of claims 13 obtained from a use of any of claims 1 to 12.

## Revendications

1. Utilisation d'une douille d'étanchéité (1) destinée à être posée sur une conduite pour assurer l'étanchéité contre celle-ci, et ce en appuyant contre la conduite selon des directions radiales (3) vers l'intérieur, lesquelles directions radiales (3) sont perpendiculaires à un axe longitudinal (2) de la douille d'étanchéité (1),
laquelle douille d'étanchéité (1), d'une dureté Shore (A) maximale de 60 Shore, est formée rabattable en une première de ses extrémités axialement opposées pour constituer une partie de rabattement (1a), de telle manière que la partie de rabattement (1a) et une partie différente de celle-ci, dite partie d'appui (1b), de la douille d'étanchéité (1) se font suite l'une à l'autre
- selon les directions radiales (3), dans une position rabattue de la partie de rabattement (1a), et
- dans le sens axial, dans une position non rabattue de la partie de rabattement (1a);
dans la position non rabattue, la partie de rabattement (1a) présente, sur au moins une partie relativement importante de son étendue axiale, un diamètre intérieur propre qui est au moins aussi important que le diamètre intérieur de la partie d'appui (1b),
et, dans la position non rabattue de la partie de rabattement (1a), ladite partie de rabattement (1a) présente, dans une direction axiale allant de la partie d'appui (1b) vers la partie de rabattement (1a), un diamètre intérieur allant croissant et/ou la partie d'appui (1b) présente un diamètre intérieur allant croissant,
dans le cadre de ladite utilisation, la partie de rabattement (1a) est amenée à prendre la position rabattue pour adapter la douille d'étanchéité (1) à un plus petit diamètre extérieur de la conduite.

2. Utilisation selon la revendication 1, dans laquelle la partie de rabattement (1a) présente, dans la position non rabattue, un diamètre intérieur moyen qui est au moins aussi important que le diamètre intérieur de la partie d'appui (1b).

3. Utilisation selon la revendication 1 ou 2, dans laquelle la surface intérieure de la partie de rabattement (1a) présente une étendue droite, dans la position non rabattue vue selon des plans en coupe contenant l'axe longitudinal (2).

4. Utilisation selon l'une des revendications précédentes, dans laquelle, lors du rabattement, la partie de rabattement (1a) est rabattue vers la partie d'appui (1b) si bien que la partie de rabattement en position rabattue se situe, selon les directions radiales (3), entre une surface extérieure de la conduite et une surface intérieure de la partie d'appui (1b), une fois que la douille d'étanchéité (1) a été posée sur la conduite.

5. Utilisation selon l'une des revendications précédentes, dans laquelle la douille d'étanchéité (1) présente, sur son intérieur, une saillie (4) rentrant vers l'intérieur et faisant axialement suite à la partie d'appui (1b), et ce à l'opposé de la partie de rabattement (1a) dans la position non rabattue, laquelle saillie (4), lors de la pose de la douille d'étanchéité (1), agit en butée pour limiter axialement l'insertion axiale d'une conduite de diamètre relativement important, ladite partie de rabattement (1a) étant dans la position non rabattue, et de préférence également d'une conduite de plus petit diamètre, la partie de rabattement (1a) étant dans la position rabattue.

6. Utilisation selon l'une des revendications précédentes, dans laquelle la douille d'étanchéité (1) est conçue, vue axialement entre la partie d'appui (1b) et la partie de rabattement (1a), dans la position non rabattue, sous la forme d'une charnière pelliculaire (1c) par le biais de laquelle la partie de rabattement (1a) est disposée rabattable par rapport à la partie d'appui (1b).

7. Utilisation selon l'une des revendications précédentes, dans laquelle la douille d'étanchéité (1) est également formée rabattable en une deuxième extrémité axialement opposée à la première extrémité pour constituer une autre partie de rabattement, de telle manière que l'autre partie de rabattement et une partie différente de celle-ci, dite autre partie d'appui de la douille d'étanchéité (1), se font suite l'une à l'autre
- selon les directions radiales (3), dans une position rabattue de l'autre partie de rabattement, et
- dans le sens axial, dans une position non rabattue de l'autre partie de rabattement.

8. Utilisation selon l'une des revendications précédentes, dans laquelle la conduite, contre laquelle sont appuyées conjointement la partie d'appui (1b) et la partie de rabattement (1a) dans la position rabattue, consiste en un tuyau creux qui se termine dans la douille d'étanchéité (1) et qui est parcouru par une autre conduite, un bouchon d'étanchéité (10) étant prévu sur la douille d'étanchéité (1) en une deuxième extrémité axialement opposée à la première extrémité, ladite autre conduite étant introduite par une ouverture de passage du bouchon d'étanchéité (10) et ledit bouchon d'étanchéité (10) assurant l'étanchéité de l'autre conduite contre la douille d'étanchéité (1), une coque circulaire (10a) étant prévue dans l'ouverture de passage avant l'introduction de l'autre conduite, laquelle coque est amovible pour permettre de s'adapter au diamètre extérieur de l'autre conduite.

9. Utilisation selon l'une des revendications précédentes, dans laquelle la conduite, contre laquelle sont appuyées conjointement la partie d'appui (1b) et la partie de rabattement (1a) dans la position rabattue, consiste en un tuyau creux qui se termine dans la douille d'étanchéité (1) et qui est parcouru par une autre conduite, un bouchon d'étanchéité (10) étant prévu sur la douille d'étanchéité (1) en une deuxième extrémité axialement opposée à la première extrémité, ladite autre conduite étant introduite par une ouverture de passage du bouchon d'étanchéité (10) et ledit bouchon d'étanchéité (10) assurant l'étanchéité de l'autre conduite contre la douille d'étanchéité (1), ladite ouverture de passage étant bouchée à l'aide d'un bouchon borgne (10d) avant l'introduction de l'autre conduite, lequel bouchon borgne est retiré pour pouvoir introduire ladite autre conduite.

10. Utilisation selon la revendication 8 ou 9, dans laquelle la coque (10a) et/ou le bouchon borgne (10d) sont reliés à au moins une partie du reste du bouchon d'étanchéité (10) par le biais d'un pont de matériau (10b).

11. Utilisation selon l'une des revendications 8 à 10, dans laquelle le bouchon d'étanchéité (10) est une pièce séparée qui est insérée dans la douille d'étanchéité (1) et qui est retenue ensuite axialement de préférence par complémentarité de forme.

12. Utilisation selon la revendication 11, en combinaison avec la revendication 7, dans laquelle le bouchon d'étanchéité (10) s'insère dans l'autre partie d'appui de la douille d'étanchéité (1) et dans l'autre partie de rabattement, dans la position rabattue.

13. Dispositif formant conduite, comportant:
une conduite, et
une douille d'étanchéité (1) d'une dureté Shore (A) maximale de 60 Shore;
laquelle douille d'étanchéité (1) est formée rabattable en une première de ses extrémités axialement opposées pour constituer une partie de rabattement (1a), de telle manière que la partie de rabattement (1a) et une partie différente de celle-ci, dite partie d'appui (1b), de la douille d'étanchéité (1) se font suite l'une à l'autre
- selon les directions radiales (3), dans une position rabattue de la partie de rabattement (1a), et
- dans le sens axial, dans une position non rabattue de la partie de rabattement (1a);
dans la position non rabattue, la partie de rabattement (1a) présente, sur au moins une partie relativement importante de son étendue axiale, un diamètre intérieur propre qui est au moins aussi important que le diamètre intérieur de la partie d'appui (1b),
et, dans la position non rabattue de la partie de rabattement (1a), ladite partie de rabattement (1a) présente, dans une direction axiale allant de la partie d'appui (1b) vers la partie de rabattement (1a), un diamètre intérieur allant croissant et/ou la partie d'appui (1b) présente un diamètre intérieur allant croissant,
dans lequel dispositif formant conduite la partie de rabattement (1a) est appuyée, dans la position rabattue, contre la conduite, conjointement avec la partie d'appui (1b), pour adapter la douille d'étanchéité (1) à un plus petit diamètre extérieur de la conduite.

14. Dispositif formant conduite selon la revendication 13, produit par une utilisation selon l'une des revendications 1 à 12.
